# FASCICULE DE BREVET EUROPEEN

(11) **EP 2 756 626 B1**
(45) Date de publication et mention de la délivrance du brevet: **25.11.2020**
(21) Numéro de dépôt: 12761584.7
(22) Date de dépôt: 12.09.2012
(51) Int. Cl.: H04L 9/08, H04L 29/06

(54) **PROCÉDÉ D'ÉCHANGES SÉCURISÉS DE DONNÉES, DISPOSITIF ET SYSTÈME DE COMMUNICATION LE METTANT EN OEUVRE**
VERFAHREN ZUM SICHEREN AUSTAUSCH VON DATEN SOWIE KOMMUNIKATIONSVORRICHTUNG UND -SYSTEM ZU SEINER ANWENDUNG
SECURE DATA EXCHANGE METHOD, AND COMMUNICATION DEVICE AND SYSTEM IMPLEMENTING SAME

(30) Priorité: 13.09.2011 FR 1158132
(43) Date de publication de la demande: 23.07.2014
(73) Titulaire: SAGEMCOM BROADBAND SAS, 92500 Rueil-Malmaison (FR)
(72) Inventeur: LANDAIS, Thomas, F-92500 Rueil Malmaison (FR)
(74) Mandataire: Camus, Olivier Jean-Claude
(86) Numéro de dépôt international: PCT/EP2012/067847
(87) Numéro de publication internationale: WO 2013/037828

(56) Documents cités:
- EP-A1- 1 278 330
- WO-A2-02/19609
- WO-A2-02/39660
- US-A1- 2003 233 364
- US-A1- 2008 046 718
- US-A1- 2009 190 762
- US-B1- 6 259 791
- US-B1- 7 315 950

## Description

### Domaine de l'invention

L'invention concerne un procédé d'échange sécurisé de données entre un dispositif de communication et un fournisseur de services via un réseau de communication, ainsi que la création et la gestion de communautés d'utilisateurs.

### Etat de la technique

Il est connu que des utilisateurs accèdent à des services, par exemple des jeux, vidéos, ou partage d'informations, proposés par des fournisseurs de service. Les fournisseurs de service sont en général des fournisseurs spécialisés, ou des opérateurs de télécommunication proposant à leurs abonnés des contenus ou services spécifiques.

A cet effet, les utilisateurs disposent d'un dispositif de communication, comme par exemple un décodeur numérique, qui leur permet d'accéder aux services proposés par les fournisseurs de services, via un réseau de communication, notamment de type Internet.

En général, un même dispositif de communication est utilisé par plusieurs utilisateurs, comme par exemple dans le cas d'une famille comprenant plusieurs personnes.

Les échanges entre le dispositif de communication et le fournisseur de services doivent être sécurisés, afin d'éviter que des tiers n'accèdent à des informations personnelles de l'utilisateur. A cet effet, des protocoles de sécurisation des échanges de données existent, comme les certificats SSL (de l'anglais *Secure Socket Layer*), et HTTPS (de l'anglais *Hypertext Transfer Protocol Secure*).

Toutefois, les procédés d'échange sécurisé de l'état de la technique peuvent être détournés par des tiers, qui peuvent par exemple proposer de faux certificats SSL aux utilisateurs.

En particulier, ces échanges sont sensibles aux attaques dites de l'homme du milieu, qui concerne un tiers réussissant à intercepter les communications entre le dispositif de communication et le fournisseur de services, notamment en se faisant passer pour un relais ou un routeur.

Par ailleurs, comme souligné auparavant, le même dispositif de communication est le plus souvent utilisé par une pluralité d'utilisateurs. Le fournisseur de services souhaite pouvoir distinguer les utilisateurs d'un même dispositif de communication, afin d'offrir des services adaptés et personnalisés.

De même, chaque utilisateur souhaite pouvoir utiliser les services, comme par exemple les réseaux sociaux ou les comptes de messagerie, sans que les autres utilisateurs n'aient accès à ses données.

Enfin, le fournisseur de services souhaite pouvoir offrir à chaque utilisateur la possibilité de créer ou de se connecter à des communautés d'utilisateurs, afin de favoriser les échanges et de diversifier les services proposés aux utilisateurs.

Toutefois, à ce jour, il n'existe pas de solution permettant de répondre à ces besoins notamment en termes de sécurité, de facilité d'utilisation, et d'efficacité.

Le document US 2003/233364 A1 décrit un procédé de gestion de groupes d'utilisateurs dans un serveur. Le document WO 02/39660 A2 divulgue un système de communication cryptographique entre plusieurs utilisateurs et un fournisseur de services.

### Présentation de l'invention

L'invention est définie par les revendications indépendantes.

Il est proposé, dans un mode de réalisation un procédé d'échange sécurisé de données entre un dispositif de communication et un serveur d'un fournisseur de services via un réseau de communication, ledit procédé étant caractérisé en ce que des données échangées entre le dispositif de communication et au moins un serveur du fournisseur de services permettent la création et l'accès à des communautés regroupant une pluralité d'utilisateurs et des services spécifiques, caractérisé en ce que les étapes d'échange de données consistent à :
- associer une clé publique asymétrique d'un ou plusieurs utilisateurs à au moins une communauté demandée par celui-ci, chaque utilisateur d'une pluralité d'utilisateurs d'un dispositif de communication disposant chacun d'une clé publique asymétrique qui lui est propre,
- permettre aux utilisateurs d'accéder aux services de la communauté, et/ou d'échanger avec les autres utilisateurs de la communauté, par reconnaissance de la clé publique de chaque utilisateur, et
- sécuriser les échanges de données entre les utilisateurs et la communauté, et/ou entre les utilisateurs d'une même communauté, par cryptage d'au moins une partie des données envoyées, via une clé matérielle, connue du fournisseur de services, et inscrite matériellement dans une mémoire morte d'une puce électronique du dispositif de communication de chaque utilisateur, et par décryptage, lors de la réception de données, des données reçues, via cette clé matérielle.

Dans un mode de réalisation, les données échangées comprennent au moins l'une des informations suivantes :
- un identifiant unique propre au dispositif de communication, permettant au serveur du fournisseur de services d'identifier le dispositif de communication, le serveur du fournisseur de services utilisant cette identifiant pour trouver la clé matérielle associée au dispositif de communication,
- un identifiant de service, propre à chaque service demandé par l'utilisateur via le dispositif de communication, permettant au serveur fournisseur de services d'identifier le service demandé par l'utilisateur via le dispositif de communication,
- une information relative à un index utilisé pour choisir une clé transmise sur le réseau de communication,
- un protocole de communication sécurisée entre le dispositif de communication et le serveur du fournisseur de services.

Dans un mode de réalisation, les données échangées entre le dispositif de communication et le serveur fournisseur de services comprennent au moins une clé de premier niveau, elle-même permettant de décrypter au moins une clé de deuxième niveau, ce cryptage successif étant réalisé jusqu'à une clé de niveau n, avec n un entier supérieur ou égal à deux, la clé de premier niveau étant cryptée par la clé matérielle.

Dans un mode de réalisation, chaque utilisateur s'enregistre auprès du dispositif de communication, et se voit attribuer une clé publique asymétrique qui lui est propre, ainsi qu'une clé privée asymétrique qui lui est propre. Les données échangées entre le dispositif de communication et le serveur du fournisseur de services comprennent la clé publique asymétrique propre à l'utilisateur, ladite clé publique asymétrique étant cryptée ou non cryptée par la clé matérielle, la clé publique asymétrique permettant d'identifier l'utilisateur, et/ou des services du fournisseur de service associés à cet utilisateur.

Dans un mode de réalisation, un utilisateur peut demander l'accès à une communauté publique, gérée par le fournisseur d'accès. Cet accès est réalisé via l'association par le serveur du fournisseur de services de la clé publique asymétrique de l'utilisateur avec la communauté publique. De même, un utilisateur peut demander l'accès à une communauté privée, gérée par un autre utilisateur. Cet accès est réalisé, après accord de l'autre utilisateur, via l'association par le serveur du fournisseur de services de la clé publique asymétrique de l'utilisateur avec la communauté privée.

Dans un mode de réalisation, l'échange de données entre le serveur du fournisseur de services et des utilisateurs membres d'une même communauté comprend l'étape selon laquelle une clé pluri-utilisateurs, commune à au moins une partie des utilisateurs de la communauté, est utilisée pour crypter les données échangées.

En particulier, selon un aspect, l'envoi de données du serveur du fournisseur de services vers des utilisateurs membres d'une même communauté, lesdites données étant identiques pour les utilisateurs, comprend l'étape selon laquelle le serveur du fournisseur de services envoie une seule fois ces données, cryptées par la clé pluri-utilisateurs, vers le réseau de communication qui les renvoie vers chaque utilisateur membre de la même communauté.

Dans un mode de réalisation, le serveur du fournisseur de services envoie une clé de cryptage à au moins deux dispositifs de communication d'utilisateurs souhaitant échanger des données entre eux, et les dispositifs de communication échangent des données entre eux directement via le réseau de communication, sans que les données ne transitent par le serveur du fournisseur de services, lesdites données étant cryptées par la clé de cryptage.

Les échanges entre le dispositif de communication et le fournisseur de services bénéficient d'une sécurisation accrue. En particulier, les attaques de tiers consistant à s'interposer entre le dispositif de communication et le fournisseur de services ne sont plus possibles.

Cette sécurisation accrue n'altère pas l'interface d'utilisation du dispositif de communication, qui est configurée pour rester simple et intuitive pour un utilisateur.

En outre, une personnalisation des services et une identification de chaque utilisateur d'un même dispositif de communication est rendu possible.

Le fournisseur de services peut proposer des services sécurisés et à forte valeur ajoutée. Ainsi, la création et la gestion de communautés d'utilisateurs, proposant un ou plusieurs services, est rendu possible, de manière efficace et sécurisée. De même, les communications entre différents utilisateurs de différents dispositifs de communication présentent une sécurité accrue, et une efficacité améliorée.

Cette sécurisation et cette amélioration de la qualité des services peuvent être obtenues, le cas échéant, sans altération de la bande passante du fournisseur de services.

### Présentation des figures

D'autres caractéristiques et avantages de l'invention ressortiront encore de la description qui suit, laquelle est purement illustrative et non limitative, et doit être lue en regard des dessins annexés sur lesquels :
- la Figure 1 est une représentation schématique d'un mode de réalisation d'un système de communication comprenant un dispositif de communication échangeant des données avec un serveur d'un fournisseur de services, via un réseau de communication ;
- la Figure 2 est une représentation schématique d'un mode de réalisation d'un dispositif de communication ;
- la Figure 3 est une représentation schématique d'un cryptage successifs de clés ;
- la Figure 4 est une représentation schématique d'un mode de réalisation de l'enregistrement d'un utilisateur auprès d'un dispositif de communication ;
- la Figure 5 est une représentation schématique d'un mode de réalisation d'un format (trame) de données échangées entre un dispositif de communication et un serveur d'un fournisseur de services ;
- la Figure 6 est une représentation schématique d'un mode de réalisation de l'accès par un utilisateur à une communauté publique ;
- la Figure 7 est une représentation schématique d'un mode de réalisation de l'accès par un utilisateur à une communauté privée ;
- la Figure 8 est une représentation schématique d'un mode de réalisation d'échanges entre utilisateurs d'une même communauté ;
- la Figure 9 est une représentation schématique d'un mode de réalisation d'échanges entre utilisateurs, et d'échanges entre un fournisseur de services et les utilisateurs.

### Description détaillée

### Description d'éléments d'un système de communication

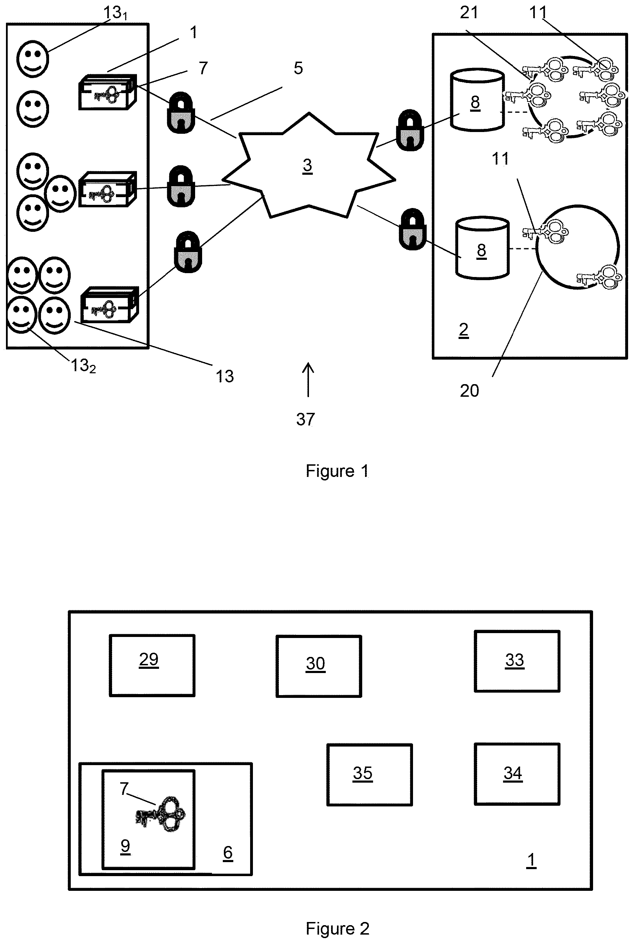

On a représenté en Figure 1 un système 37 de communication configuré pour l'échange sécurisé de données 5 entre un dispositif 1 de communication et au moins un serveur 8 d'un fournisseur 2 de services, via un réseau 3 de communication.

Le réseau 3 de communication est par exemple, mais non limitativement, un réseau Internet, de type réseau IP (*Internet Protocol*), ou un réseau de téléphonie de type 3G, ou un réseau local.

Le fournisseur 2 de services est un opérateur qui est apte à fournir des services à un utilisateur. On entend notamment par service tout contenu (musique, film, jeux, accès à Internet...), ou système d'échanges entre utilisateurs (réseaux sociaux, échanges vidéo, courriel,...) que le fournisseur 2 de services peut proposer à l'utilisateur par l'intermédiaire de son dispositif 1 de communication.

Il s'agit par exemple d'un opérateur de télécommunications, auquel l'utilisateur est abonné pour pouvoir accéder au réseau de communication, l'opérateur fournissant entre outre des services à ses abonnés.

Alternativement, il s'agit d'un opérateur de services dédié à la fourniture de services à des utilisateurs.

Le fournisseur 2 de services comprend en général au moins un serveur 8 apte à se connecter au réseau 3 de communication, par exemple via des connexions physiques (par exemple, ADSL, ou fibre optique) ou des antennes (par exemple dans le cas de fournisseurs 2 de type opérateurs mobiles).

Le fournisseur 2 de services comprend, le cas échéant, une pluralité de connexions physiques (câbles, fibres optiques, etc.), ou une série d'antennes permettant la connexion au réseau 3 de communication.

En général, le fournisseur 2 de services comprend plusieurs serveurs 8.

Les serveurs 8 gèrent les échanges de données avec les dispositifs 1 de communication, via le réseau 3 de communication. Les serveurs 8 comprennent une pluralité d'unités de traitement, ou d'ordinateurs, des programmes de contrôle, des mémoires, et, le cas échéant, une interface utilisateur.

La structure d'un fournisseur de services est classique, et dépend principalement du type de connexion au réseau de communication (ex : opérateur ADSL, 3G ou autres normes de ce type -1G, 2G,...,4G-, Wi-Fi, fibre optique, réseau local, etc.).

Comme schématisé en Figure 2, le dispositif 1 de communication comprend des moyens 29 d'accès au réseau 3 de communication, pour échanger des données, via ce réseau 3, avec le serveur 8 du fournisseur 2 de services.

Les moyens 29 d'accès sont par exemple des moyens d'émission et de réception radio, ou Wi-Fi, ou de type antenne, ou des moyens filaires, ou tout autre moyen technique permettant de se connecter au réseau 3 de communication.

Le dispositif 1 de communication est localisé du côté de l'utilisateur. Par exemple, le dispositif 1 de communication est localisé dans le foyer ou au lieu de travail de l'utilisateur. Alternativement, le dispositif 1 de communication est un dispositif mobile, que l'utilisateur peut emmener avec lui, comme par exemple un dispositif de téléphonie mobile.

Le dispositif 1 comprend en outre une interface 30, lui permettant d'interagir avec un utilisateur. L'interface 30 est en général une interface logicielle, qui affiche sur un écran connecté au dispositif 1 des choix et instructions permettant à l'utilisateur de commander le dispositif 1. Alternativement, le dispositif 1 comprend lui-même un écran, et l'interface 30 consiste en l'interface logicielle précitée associée à l'écran.

De manière classique, le dispositif 1 de communication comprend des moyens 33 d'alimentation électrique (batterie, prise de courant, etc.) et au moins un processeur 34 gérant les différentes fonctions du dispositif 1.

En général, le dispositif 1 de communication comprend également une mémoire 35, de type disque dur ou mémoire amovible, permettant de stocker des données reçues ou échangées.

Comme représenté en Figure 2, le dispositif 1 comprend une clé 7 matérielle, inscrite matériellement dans une mémoire 9 morte d'une puce 6 électronique du dispositif 1 de communication.

Une mémoire 9 morte est une mémoire dont le contenu est inscrit matériellement une fois pour toutes, lors de la fabrication de la puce 6 comprenant ladite mémoire. Ainsi, son contenu est défini lors de la fabrication, et n'est plus modifiable. La clé 7 matérielle est donc générée lors de la fabrication du dispositif 1 de communication.

On entend par puce électronique tout ensemble électronique pouvant comprendre une mémoire morte.

La clé 7 matérielle est une clé de cryptage, et permet au dispositif 1 de crypter ou de décrypter des données.

Cette clé 7 matérielle est inscrite physiquement dans la mémoire morte de la puce 6 électronique du dispositif 1 de communication. La clé 7 matérielle est un ensemble plus ou moins complexe de bits, ledit ensemble de bits étant réalisé via des composants physiques (transistors, etc.) de la mémoire 9 morte.

La clé 7 n'est pas consultable de l'extérieur, par exemple par un logiciel. En effet, la mémoire 9 morte est enfouie dans la puce 6 électronique, de sorte à interdire la consultation de son contenu de l'extérieur par un tiers.

Ainsi, seul le fabricant de la puce 6 connaît cette clé 7 matérielle, étant donné qu'il l'a lui-même définie et fabriquée.

Lors de l'achat par le fournisseur 2 de services du dispositif 1 de communication, le fabricant de la puce lui communique cette clé 7 matérielle, afin qu'il puisse l'utiliser comme exposé par la suite. Bien sûr, le fournisseur 2 de services peut lui-même fabriquer la puce 6 électronique.

Dans un mode de réalisation, non limitatif, il s'agit d'une clé AES *(« Advanced Encryption Standard »,* qui est un algorithme de cryptage symétrique) de 128 bits, ou plus (par exemple 192, 256 bits). D'autres clés, utilisées dans d'autres algorithmes de cryptage, peuvent être utilisés, selon les besoins en sécurité (clés DES de 56 bits, « *Data Encryption Standard »,* clés triple DES de 64 bits, etc.). Ces types de clés ne sont pas limitatifs.

Dans un mode de réalisation, cette clé 7 matérielle est unique pour chaque dispositif 1.

### Echanges sécurisés dans le système de communication

Dans un mode de réalisation, il est proposé un procédé d'échange sécurisé de données dans le système 37 de communication, entre le dispositif 1 de communication et le serveur 8 du fournisseur 2 de services via le réseau 3 de communication, le dispositif 1 de communication permettant à au moins un utilisateur 13 du dispositif 1 de communication d'utiliser des services fournis par le fournisseur 2 de services.

Ainsi, les échanges de données 5 entre le dispositif 1 de communication et le serveur 8 du fournisseur 2 de services, via le réseau 3 de communication, comprennent, pour l'envoi de données, l'étape consistant à crypter au moins une partie des données 5 envoyées, par l'intermédiaire de la clé 7 matérielle connue du fournisseur 2 de services et inscrite matériellement dans une mémoire morte d'une puce 6 électronique du dispositif 1 de communication.

Ainsi, du côté du dispositif 1 de communication, celui-ci transmet les données à envoyer à la puce 6 électronique comprenant la clé matérielle 7, qui lui renvoie les données cryptées. Puis, le dispositif 1 de communication transmet les données cryptées au réseau 3 de communication par l'intermédiaire de ses moyens 29 d'accès au réseau 3 de communication.

Il en est de même pour le serveur 8 du fournisseur 2 de services, qui dispose de la clé 7 matérielle, et peut ainsi crypter les données en utilisant cette clé 7, par exemple par l'intermédiaire d'un processeur ou d'une puce électronique.

Dans un mode de réalisation, le fournisseur 2 de services détient une puce comprenant cette clé 7, ladite clé 7 étant stockée dans une mémoire morte de ladite puce.

Alternativement, ou en complément, le serveur 8 du fournisseur 2 de services stocke une base de données logicielle contenant cette clé, ladite clé étant représentée par des bits constitutifs dans ladite base de données logicielle.

Etant donné que la clé 7 matérielle n'est pas échangée sur le réseau 3 de communication, et n'est qu'est connue que du fournisseur 2 de services, les échanges de données sont sécurisés, sans risque d'interception par un tiers. Du côté du dispositif 1, cette clé 7 ne peut être extraite de la mémoire 9 morte puce 6, et n'est même pas connue de l'utilisateur lui-même.

Les échanges entre le dispositif 1 de communication et le serveur 8 du fournisseur 2 de services sont donc protégés.

Lors de la réception de données 5, les données reçues sont décryptées par l'intermédiaire de cette clé 7 matérielle.

Du côté du dispositif 1 de communication, celui-ci transmet les données à décrypter à la puce 6 comprenant la clé 7 matérielle, qui lui renvoie les données décryptées. Il en est de même du côté du serveur 8 du fournisseur 2 de services, qui utilise la clé 7 matérielle et un processeur pour décrypter les données.

Dans un exemple de réalisation, détaillé par la suite, les données échangées entre le dispositif 1 de communication et le serveur 8 du fournisseur 2 de services permettent la création et l'accès à des communautés regroupant une pluralité d'utilisateurs et des services spécifiques, l'accès à une communauté permettant d'utiliser ces services et/ou d'échanger des données avec les autres utilisateurs de la communauté.

Ainsi, la création et l'accès à ces communautés sont sécurisés grâce à l'échange sécurisé venant d'être décrit.

### Exemples de données échangées dans le système de communication

Divers types de données peuvent être échangés entre le dispositif 1 de communication et le serveur 8 du fournisseur 2 de services.

Dans certains échanges, comme par exemple des transactions bancaires, il est nécessaire de transmettre une clé de cryptage par l'intermédiaire du réseau 3 de communication.

Dans un mode de réalisation de l'invention, un mécanisme de cryptage successif de clés est utilisé.

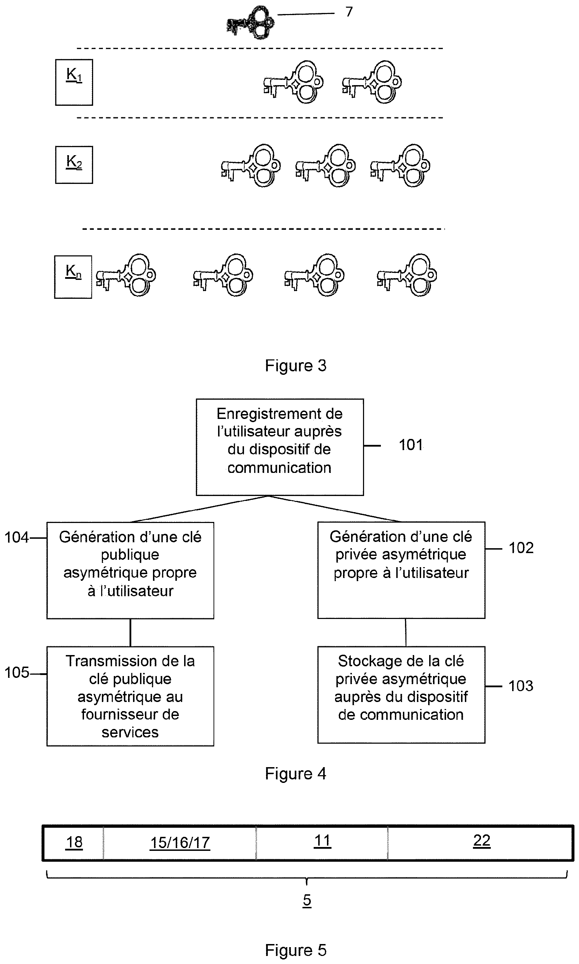

Ce mode de réalisation est illustré en Figure 3.

Dans ce mode de réalisation, les données 5 échangées entre le dispositif 1 de communication et le fournisseur 2 de services comprennent au moins une clé K₁ de premier niveau, celle-ci servant à crypter au moins une clé K₂ de deuxième niveau, ce cryptage successif étant réalisé jusqu'à une ou plusieurs clés Kₙ de niveau n, avec n un entier supérieur ou égal à deux, la clé K₁ de premier niveau étant cryptée par la clé 7 matérielle.

Les clés K₁,...Kₙ, sont des clés logicielles, c'est-à-dire des suites aléatoires de bits, générés par des logiciels ou des algorithmes dédiés.

La clé K₁ de premier niveau permet de décrypter l'ensemble des clés des K₂ de niveau 2, qui elles-mêmes permettent de décrypter l'ensemble des clés des K₃ de niveau 3, et ainsi de suite.

Ce mécanisme de cryptage successif renforce la sécurité. Ainsi, si le serveur 8 du fournisseur 2 de services décide de transmettre sur le réseau une clé Kₙ de niveau n, un tiers devrait trouver les clés K₁ à Kₙ₋₁ pour pouvoir obtenir la clé Kₙ échangée.

Or, pour trouver la clé K₁, il est nécessaire de trouver la clé 7 matérielle, qui permet de décrypter la clé K₁. Toutefois, comme explicité auparavant, la clé 7 matérielle est disposée physiquement et à demeure dans une puce 6 du dispositif 1, sans qu'un tiers ne puisse y accéder.

La sécurité de l'échange est donc garantie.

Le fournisseur 2 de services peut choisir le nombre de clés correspondant à chaque niveau.

Dans un exemple de réalisation, le fournisseur 2 de services fixe 64 clés de niveau 1, permettant chacune de déchiffrer 16 clés de niveau 2, ce qui donne au total 1024 clés de niveau 2 (clé 1, clé n°2, ..., clé n° 1024).

Si le service proposé par le fournisseur 2 de services aux utilisateurs du dispositif 1 de communication est une application bancaire, le serveur 8 du fournisseur 2 de services peut par exemple contrôler et programmer le service pour que celui-ci choisisse de manière aléatoire une clé parmi les clés n°1009 à n°1024.

Dans un mode de réalisation, le fournisseur 2 de services programme le service pour que celui-ci choisisse de manière aléatoire un nombre, dit index, entre 0 et 15. Le fournisseur 2 de services programme en outre le service pour que chaque index soit associé à une clé parmi les clés n°1009 à n°1024. Le choix de la clé se fait donc par tirage aléatoire de l'index, lui-même associé à une clé. Le tirage aléatoire et le choix des index n'est connu que du fournisseur 2 de services.

### Enregistrement et identification des utilisateurs et du dispositif de communication

Dans un mode de réalisation, le fournisseur 2 de services souhaite pouvoir connaître l'identité de l'utilisateur du dispositif 1 de communication. Ceci présente plusieurs intérêts, comme la personnalisation des services proposés à l'utilisateur, le suivi de son profil et de sa consommation, la protection de ses données par rapport à d'autres utilisateurs, etc.

Ainsi, selon un mode de réalisation, un enregistrement de l'utilisateur 13 auprès du dispositif 1 de communication est effectué, le résultat de cet enregistrement étant communiqué au serveur 8 du fournisseur 2 de services par le réseau 3 de communication.

Ceci est illustré en Figure 4, dans laquelle un utilisateur 13 s'enregistre (étape 101) auprès du dispositif 1 de communication qui génère :
- au moins une clé 11 publique asymétrique propre à l'utilisateur 13 (étape 104) et transmise au serveur 8 du fournisseur 2 de services (étape 105), et
- une clé privée asymétrique propre à l'utilisateur 13 (étape 101) et stockée dans le dispositif 1 de communication (étape 103).

Le dispositif 1 de communication décide du type de clé, de la longueur des clés, de la durée de la validité des clés, sans intervention de l'utilisateur. Le cas échéant, le dispositif 1 définit une phrase secrète prise aléatoirement dans un dictionnaire de phrases, et stockée avec la clé privée dans une zone sécurisée du dispositif 1 de communication. Cette phrase secrète est par exemple utilisée dans le processus de création des clés asymétriques, et sert de rappel mnémotechnique.

Le serveur 8 du fournisseur 2 de service peut donc reconnaître l'utilisateur 13 via sa clé publique asymétrique qui lui est propre.

En effet, dans un mode de réalisation, lorsqu'un utilisateur utilise le dispositif 1 de communication, les données 5 échangées entre le dispositif 1 de communication et le serveur 8 du fournisseur 2 de services comprennent la clé publique asymétrique propre à l'utilisateur 13, la clé publique asymétrique permettant d'identifier l'utilisateur 13, et/ou des services associés à cet utilisateur 13.

Dans un mode de réalisation, la clé publique asymétrique de l'utilisateur, transmise lors des échanges du dispositif 1 de communication avec le fournisseur 2 de services, est cryptée par la clé 7 matérielle. Ceci n'est toutefois pas obligatoire.

L'enregistrement de l'utilisateur 13 auprès du dispositif 1 de communication s'effectue en général via interaction avec l'interface 30 du dispositif 1 de communication.

Dans un exemple de réalisation, l'interface 30 demande à l'utilisateur la définition d'un identifiant et d'un mot de passe, pour l'enregistrement dudit utilisateur. Le cas échéant, l'interface 30 demande à l'utilisateur des informations obligatoires (nom, prénom, courriel) et des informations facultatives (commentaires, pseudonyme, etc.)

Une fois ces étapes effectuées, le procédé de génération de clés propres à l'utilisateur est exécuté.

Pour éviter qu'un utilisateur d'un dispositif 1 de communication ne tente de s'identifier frauduleusement à la place d'un autre utilisateur de ce dispositif 1, il est prévu, dans un mode de réalisation, que la saisie erronée de plusieurs (par exemple trois) mots de passe entraîne le blocage du dispositif 1 de communication. Ce blocage ne peut être levé que par le fournisseur 2 d'accès.

Dans un mode de réalisation, les données 5 échangées entre le dispositif 1 de communication et le serveur 8 du fournisseur 2 de services comprennent un identifiant 15 unique propre au dispositif 1 de communication, permettant au serveur 8 du fournisseur 2 de services d'identifier le dispositif 1 de communication.

Un avantage de l'utilisation d'un tel identifiant 15 est que le serveur 8 du fournisseur 2 de services peut rapidement identifier le dispositif 1 de communication qui lui envoie des données, et peut donc sélectionner plus rapidement la clé 7 matérielle correspondant à ce dispositif 1 de communication. L'identifiant 15 est par exemple une suite de chiffres et/ou de lettres.

Dans un mode de réalisation, les données 5 échangées entre le dispositif 1 de communication et le serveur 8 du fournisseur 2 de services comprennent un identifiant 16 de service, propre à chaque service demandé par l'utilisateur via le dispositif 1 de communication, et permettant au fournisseur 2 de services d'identifier le service demandé par l'utilisateur via le dispositif 1 de communication.

Cet identifiant 16 permet au serveur 8 du fournisseur 2 de services de répondre à la demande d'accès à un service de la part de l'utilisateur, avec un temps de réponse plus court.

De même, du côté du dispositif 1 de communication, cet identifiant 16 permet d'accélérer le traitement des données.

Dans un mode de réalisation, les données 5 échangées entre le dispositif 1 de communication et le serveur 8 du fournisseur 2 de services comprennent une information relative à un index 17 utilisé pour choisir une clé transmise sur le réseau 3 de communication. Cet index peut être, dans un mode de réalisation, le numéro de la clé.

Dans un autre mode de réalisation, l'index permet d'indiquer dans un tableau prédéfini la clé effectivement employée pour chiffrer/déchiffrer. Par exemple, dans le cas d'un tableau de N entrées, l'accès à la clé peut être donné via un calcul prédéfini et uniquement connu de l'opérateur. Un exemple de calcul est : indice de la clé dans le tableau = (nombre prédéfini + index), modulo la taille N du tableau.

A nouveau, cet index permet de traiter plus rapidement les données échangées, du côté du fournisseur 2 de services et du côté du dispositif 1 de communication.

Dans un mode de réalisation, les données échangées comprennent un protocole 18 de communication sécurisée entre le dispositif 1 de communication et le fournisseur 2 de services. Il s'agit par exemple d'un protocole de type HTPPS (*Hypertext Transfer Protocol Secure*) ou VPN *(Virtual Private Network).*

Ces différentes modes de réalisation peuvent être combinés, ou non, en fonction des choix du fournisseur de services.

### Trame de données

Dans un mode de réalisation, les données 5 échangées respectent un format de trame spécifique.

En Figure 5, un type de trame spécifique est utilisé pour transmettre les données.

La trame comprend le protocole 18 de communication sécurisée, l'identifiant 15 unique propre au dispositif 1 de communication, l'identifiant 16 de service, propre à chaque service demandé par l'utilisateur via le dispositif 1 de communication, l'information relative à un index 17 utilisé pour choisir une clé transmise sur le réseau 3 de communication. La trame peut comprendre d'autres informations ou qu'une partie de ces informations.

La trame comprend en outre une ou plusieurs clés 11 publiques asymétriques propres à l'utilisateur, éventuellement cryptées par la clé 7 matérielle, comme évoqué plus haut.

La trame comprend également des contenus 22, échangés entre le dispositif 1 de communication et le fournisseur 2 de services. Ces contenus sont cryptés par la clé matérielle 7. Ces contenus correspondent aux informations utiles liées aux services utilisés par l'utilisateur (texte, vidéos, etc.).

Alternativement, les contenus 22 sont cryptés via le mécanisme de cryptage successif précédemment décrit. Les contenus 22 sont alors cryptés successivement par une pluralité de clés de cryptage comprenant en dernier lieu la clé matérielle, comme décrit précédemment.

Le fait d'incorporer les échanges de données dans une trame spécifique permet au dispositif 1 et/ou au serveur 8 du fournisseur 2 de services de n'accepter que les échanges qui respectent cette trame, ce qui évite des attaques de tiers consistant à envoyer des blocs de données en masse (technique connue sous l'appellation anglo-saxonne« *arp-spoofing* »). De plus, ceci facilite le traitement des données, et accélère les échanges.

### Création et gestion de communautés d'utilisateurs

Dans un mode de réalisation, les échanges de données 5 entre le dispositif 1 de communication et le serveur 8 du fournisseur 2 de services concernent la création, la gestion de communautés, ainsi que l'accès à ces communautés. Les différents modes de réalisation d'échanges de données s'appliquent donc ici, en combinaison ou séparément, selon les besoins.

Une communauté regroupe une pluralité d'utilisateurs et des services spécifiques. L'accès à une communauté permet d'utiliser ces services spécifiques et/ou d'échanger des données avec les autres utilisateurs de la communauté.

Les paramètres de création de la communauté (type de communauté, nombre de membres, nom des utilisateurs, droit d'accès, certaines données, etc.) sont stockés du côté du serveur 8 du fournisseur 2 de services.

Grâce aux différents modes de réalisation d'échanges de données décrits précédemment, la création, la gestion de communautés, ainsi que l'accès à ces communautés sont sécurisés.

Par exemple, une communauté d'amateurs de pêche à la ligne peut être créée. Ainsi, les utilisateurs membres de cette communauté peuvent échanger entre eux des photos ou du contenu liés à la pêche à la ligne. Les utilisateurs peuvent également dialoguer entre eux, par exemple sur un forum de discussion consacré à la pêche à la ligne. Des services liés à cette communauté incluent donc des forums de discussion, l'accès à des concours de pêche, l'achat de matériel en ligne, la réception de bons promotionnels, etc.

Les types de service et d'échanges entre utilisateurs peuvent être modulés selon les besoins.

Dans un mode de réalisation, on distingue les communautés 21 publiques des communautés 20 privées (cf. Figure 1).

Une communauté 21 publique est gérée par le fournisseur 2 de services, tandis qu'une communauté 20 privée est gérée par un ou plusieurs utilisateurs. En particulier, dans le cas d'une communauté publique, c'est le fournisseur 2 de services, via le serveur 8, qui décide si un autre utilisateur peut, ou non, rejoindre la communauté publique, tandis que dans le cas d'une communauté privée, c'est l'utilisateur responsable de la communauté privée qui prend cette décision.

Même si une communauté est publique, le fournisseur de services peut décider que l'accès à cette communauté est payant.

De même, les services proposés dans les communautés 21 publiques peuvent être gratuits, payants, ou il peut s'agir d'un mélange de services payants et de services gratuits.

On peut également créer des communautés au statut intermédiaire, gérées à la fois par un utilisateur et le fournisseur de services, l'accord de l'utilisateur et du fournisseur étant nécessaires pour autoriser l'accès d'un autre utilisateur.

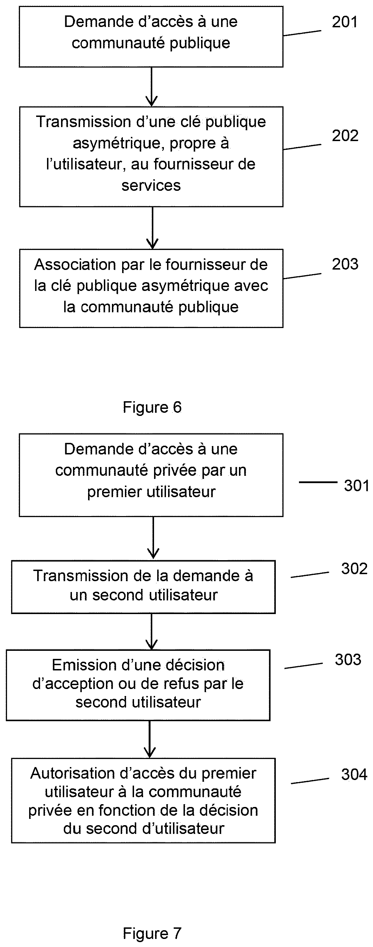

On décrit en référence aux Figures 1 et 6 un mode de réalisation d'une demande d'accès d'un utilisateur 13 à une communauté 21 publique.

Un utilisateur 13 demande, via le dispositif 1 de communication, l'accès à une communauté 21 publique proposant au moins un service et/ou l'échange de données entre utilisateurs de cette communauté (étape 201).

Cette demande peut être effectuée via l'interface 30 du dispositif 1 de communication, par exemple par sélection de la communauté 21 dans l'interface 30.

Cette communauté 21 publique est gérée par le fournisseur 2 de services, qui détermine les services associés à cette communauté ainsi que les droits d'accès des utilisateurs.

Comme décrit précédemment, chaque utilisateur 13 qui s'est enregistré auprès du dispositif 1 de communication dispose d'une clé 11 publique asymétrique qui lui est propre.

Ainsi, le dispositif 1 de communication transmet la clé 11 publique asymétrique propre à l'utilisateur 13 au serveur 8 du fournisseur 2 de services (étape 202). Cette clé 11 est éventuellement cryptée par la clé 7 matérielle du dispositif 1.

Le serveur 8 du fournisseur 2 de services associe alors à la communauté 21 publique demandée par l'utilisateur la clé 11 publique asymétrique de l'utilisateur (étape 203), permettant ainsi à l'utilisateur d'utiliser le service ou les services proposés par cette communauté 21.

Cette association consiste à stocker dans le serveur 8 une copie de la clé 11 de l'utilisateur, et à l'intégrer dans les paramètres de la communauté 21, lesdits paramètres étant stockés dans le serveur 8.

L'accès à la communauté 21 publique ne nécessite pas l'approbation d'un autre utilisateur.

Par la suite, lorsque l'utilisateur souhaite accéder aux services de la communauté, le serveur 8 du fournisseur identifie sa clé asymétrique lors des échanges de données, et constate que l'utilisateur possède une clé asymétrique associée à la communauté.

Les différents échanges de données avec la communauté sont pratiqués selon un ou plusieurs des différents modes de réalisation précédemment décrits (cryptage par clé matérielle, et/ou utilisation d'une trame de données, etc.).

A titre d'exemple, il s'agit d'une communauté 21 qui concerne les amateurs de randonnées. Les services de cette communauté sont par exemple la fourniture de cartes de randonnées, la mise en relation d'amateurs de randonnées, etc.

On décrit en référence aux Figures 1 et 7 un mode de réalisation d'une demande d'accès d'un utilisateur 13 à une communauté 20 privée.

Un premier utilisateur 13₁ demande (étape 301), via le dispositif 1 de communication, l'accès à une communauté privée 20 proposant au moins un service et/ou l'échange de données entre utilisateurs de cette communauté, ladite communauté privée étant gérée par un second utilisateur 13₂.

La demande du premier utilisateur 13₁ est transmise (étape 302), via le serveur 8 du fournisseur 2 de services, au dispositif 1 de communication du second utilisateur 13₂.

Le second utilisateur 13₂ émet une décision d'acception ou de refus via son dispositif 1 de communication (étape 303), qui est transmise au serveur 8 du fournisseur 2 de services.

Le premier utilisateur 13₁ est autorisé (étape 304) à accéder à la communauté privée 20 en fonction de la décision du second d'utilisateur 13₂, une décision d'acceptation entraînant une association de la clé 11 publique asymétrique du second d'utilisateur 13₂ à la communauté 20 privée.

Cette association consiste à stocker dans le serveur 8 une copie de la clé 11 de l'utilisateur 13₁, et à l'intégrer dans les paramètres de la communauté 20.

Ainsi, lorsque le premier utilisateur 13₁ souhaite utiliser les services de la communauté 20 privée, et/ou échanger des données avec les autres utilisateurs, le fournisseur 2 de services reconnaît sa clé 11 et l'autorise à accéder à ces services.

Le mécanisme d'acceptation par le second d'utilisateur 13₂ peut prendre diverses formes.

Dans un mode de réalisation, le second utilisateur 13₂ reçoit un message lui indiquant que le premier utilisateur 13₁ souhaite rejoindre sa communauté 20 privée. Le message peut être standard ou personnalisé et écrit par le premier utilisateur 13₁ lui-même. Ce message est affiché via l'interface 30 du dispositif 1 de communication du second d'utilisateur 13₂.

Le second d'utilisateur 13₂ peut alors émettre une décision d'acceptation ou de refus via son interface 30.

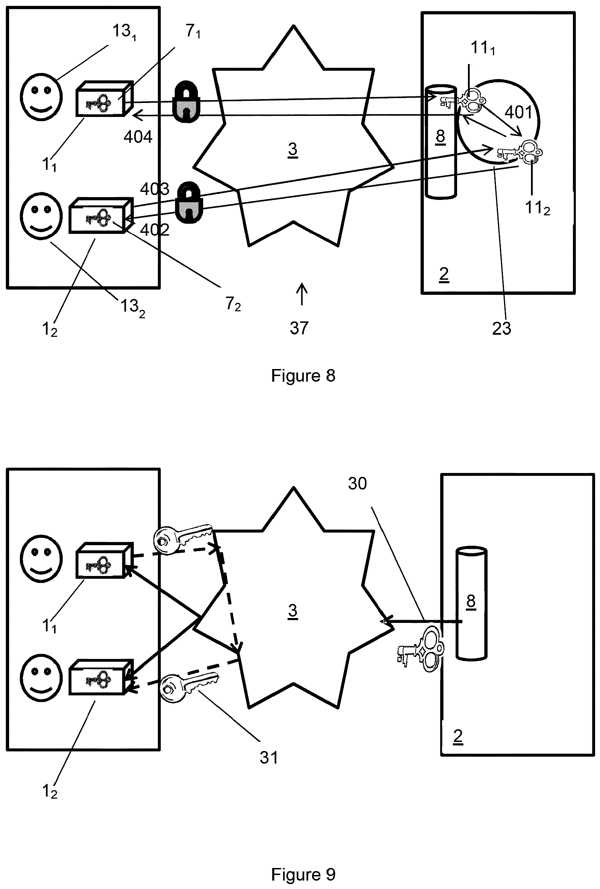

On décrit en référence à la Figure 8 un mode de réalisation d'échange de données entre des utilisateurs d'une même communauté, publique ou privée.

Cet échange repose sur les différents modes de réalisation, précédemment décrits, d'échanges de données entre le dispositif de communication et le fournisseur de service.

Comme illustré en Figure 8, un premier utilisateur 13₁ est équipé d'un premier dispositif 1₁ de communication comprenant une première clé 7₁ matérielle.

Un deuxième utilisateur 13₂ est équipé d'un deuxième dispositif 1₂ de communication comprenant une deuxième clé 7₂ matérielle.

Les deux utilisateurs 13₁ sont 13₂ sont membres d'une même communauté 23 (publique ou privée). Ainsi, comme explicité auparavant, la clé 11₁ publique asymétrique du premier utilisateur 13₁, et la clé 11₂ publique asymétrique du deuxième utilisateur 13₂ sont associées à la communauté 23.

Le premier utilisateur 13₁ demande à accéder à des données du second utilisateur 13₂ (étape 401).

Le serveur 8 du fournisseur 2 d'accès demande au deuxième dispositif 1₂ de communication à accéder aux données du second utilisateur 13₂ (étape 402).

Le deuxième dispositif 1₂ de communication transmet ces données au serveur 8 du fournisseur 2 d'accès, cryptées, au moins en partie, par la deuxième clé 7₂ matérielle (étape 403). Ce cryptage et les divers modes de réalisation d'échanges de données ont été exposés précédemment.

Le serveur 8 du fournisseur 2 d'accès décrypte ces données par l'intermédiaire de la deuxième clé 7₂ matérielle, les ré-encrypte avec la première clé 7₁ matérielle, et les transmet au premier dispositif 1₁ de communication (étape 404).

Le premier dispositif 1₁ de communication décrypte alors les données avec la première clé matérielle 7₁.

Les échanges sont ainsi sécurisés. Dans un mode de réalisation, les données échangées respectent la trame illustrée en Figure 5, en partie ou en totalité.

Dans un mode de réalisation, l'échange de données entre le serveur 8 du fournisseur 2 de services et des utilisateurs membres d'une même communauté comprend l'étape selon laquelle une clé 30 pluri-utilisateurs, commune à au moins une partie des utilisateurs de la communauté, est utilisée pour crypter les données échangées.

Dans un mode de réalisation, la clé 30 pluri-utilisateurs est une clé logicielle constituée d'une succession de bits.

Selon un aspect de ce mode de réalisation, l'envoi de données du serveur 8 du fournisseur 2 de services vers des utilisateurs membres d'une même communauté, lesdites données étant identiques pour les utilisateurs, comprend l'étape selon laquelle le serveur 8 du fournisseur 2 de services envoie une seule fois ces données vers le réseau de communication qui les renvoie vers chaque utilisateur membre de la même communauté.

Un exemple d'un tel mode de réalisation est illustré schématiquement en Figure 9.

Le serveur 8 du fournisseur 2 d'accès envoie à au moins une partie des utilisateurs d'une même communauté une clé 30 pluri-utilisateurs. Cette clé est une clé de cryptage, et est en général de validité limitée dans le temps, c'est-à-dire qu'il s'agit d'une clé temporaire. Selon les besoins, le serveur 8 du fournisseur de services peut renouveler périodiquement la clé 30 pluri-utilisateurs.

Pour recevoir la clé 30 pluri-utilisateurs, les utilisateurs doivent préalablement s'inscrire auprès du fournisseur 2 d'accès. L'inscription passe par exemple par l'envoi d'une demande à partir des dispositifs 1₁, 1₂ de communication des utilisateurs vers le serveur 8, qui reçoivent en retour la clé 30 pluri-utilisateurs.

Ces échanges sont réalisés selon les modes de réalisation d'échanges sécurisés de données décrits précédemment (cryptage par clé matérielle, et le cas échéant envoi des données sous forme de la trame évoquée précédemment). L'inscription peut être automatique. Par exemple, dès que les utilisateurs accèdent à une communauté, leurs dispositifs de communication reçoivent automatiquement une clé pluri-utilisateurs de la part du serveur 8 du fournisseur 2 de services.

L'envoi de la clé 30 pluri-utilisateurs vers les dispositifs de communication est réalisé selon les modes de réalisation d'échanges sécurisés de données décrits précédemment. En particulier, la clé 30 pluri-utilisateurs peut être envoyée par le serveur 8 à chaque dispositif de communication en étant cryptée par la clé matérielle de chaque dispositif de communication. Alternativement, la clé 30 pluri-utilisateurs peut être envoyée à chaque dispositif de communication en utilisant le mécanisme de cryptage successif précédemment décrit.

Par la suite, le serveur 8 envoie une seule fois les données cryptées par la clé 30 pluri-utilisateurs vers le réseau 3 de communication, qui les renvoie vers les dispositifs de communication de ces utilisateurs.

En fonction de la taille des données, plusieurs envois successifs par le serveur 8 du fournisseur 2 de services peuvent être nécessaire, mais chaque envoi de données par le fournisseur de services vers le réseau de communication est réalisé une seule fois, et non pas répliqué pour chaque utilisateur.

Le réseau 3 de communication se charge alors d'envoyer les données à chaque dispositif de communication des utilisateurs de la communauté.

Les dispositifs de communication (ici 1₁ et 1₂) des utilisateurs concernés décryptent les données via la clé 30 pluri-utilisateurs.

Ainsi, l'envoi de flux de données du serveur du fournisseur de services vers les dispositifs de communication des utilisateurs d'une communauté est réalisé avec un encombrement moindre de la bande passante. Cet envoi unique d'informations, crypté par une clé commune à plusieurs utilisateurs, permet d'économiser de la bande passante.

Au lieu que le fournisseur de services envoie plusieurs fois les mêmes données à destination de plusieurs utilisateurs, un seul envoi est réalisé vers le réseau de communication. Il s'agit donc d'un envoi de type multidiffusion (« *multicast* »). Le serveur 8 n'a plus à envoyer les données plusieurs fois en les cryptant différemment pour chaque utilisateur.

Dans un mode de réalisation, le serveur 8 du fournisseur 2 de services envoie une clé de cryptage 31 à au moins deux dispositifs de communication (par exemple 1₁ et 1₂, cf. Figure 9) d'utilisateurs souhaitant échanger des données entre eux. Cet envoi est réalisé selon un des modes de réalisation des échangés sécurisés précédemment décrits (cryptage par clé matérielle, et/ou respect d'une trame, et/ou cryptage successif, etc.).

La clé de cryptage est en général temporaire. Elle peut être renouvelée selon les besoins.

Les dispositifs de communication échangent alors des données entre eux directement via le réseau 3 de communication, lesdites données étant cryptées par la clé de cryptage 31. Ces échanges ne transitent plus par le serveur 8 du fournisseur 2 de services, mais sont directement réalisés entre les dispositifs de communication concernés, via le réseau 3 de communication.

Ces échanges peuvent être réalisés entre une pluralité de dispositifs de communication, comme par exemple lors d'une vidéoconférence à plusieurs utilisateurs.

Il s'agit donc d'une communication point à point, qui ne passe plus par le serveur 8 du fournisseur 2 de services.

Le fournisseur 2 de services peut facturer aux utilisateurs l'utilisation de ce service de communication point à point, par exemple à la durée et/ou via un forfait.

Dans un exemple de réalisation, les données échangées concernent une communication de type voix sur IP.

Ces échanges directs entre utilisateurs sont donc sécurisés au maximum, et permettent une communication plus efficace.

De manière générale, la solution proposée permet une sécurisation accrue des échanges de données entre le dispositif de communication et le fournisseur de services. En particulier, les attaques de tiers consistant à s'interposer entre le dispositif de communication et le fournisseur de services ne sont plus possibles.

Outre la sécurisation des échanges, une personnalisation et une identification des utilisateurs d'un même dispositif de communication est possible, permettant ainsi d'identifier chaque utilisateur d'un dispositif de communication, et les services associés à cet utilisateur.

Malgré la sécurisation et la personnalisation accrues offertes par l'invention, l'interface d'utilisation du dispositif de communication, telle que présentée à l'utilisateur, reste simple et intuitive.

Les fournisseurs de service trouvent donc des outils puissants pour la création et la gestion de communautés d'utilisateurs, proposant un ou plusieurs services, de manière efficace et sécurisée. En outre, les communications entre différents utilisateurs de différents dispositifs de communication sont sécurisées et plus efficaces.

Enfin, la bande passante du fournisseur de services n'est pas altérée tout en offrant une qualité accrue du niveau de services.

## Revendications

1. Procédé d'échange sécurisé de données (5) entre un dispositif (1) de communication et un serveur (8) d'un fournisseur (2) de services via un réseau (3) de communication, le dispositif (1) de communication étant configuré pour permettre à au moins un utilisateur (13) du dispositif (1) de communication d'utiliser des services fournis par le fournisseur (2) de services, les données (5) échangées entre le dispositif (1) de communication et au moins un serveur (8) du fournisseur (2) de services permettant la création et l'accès à des communautés (20, 21 , 23) publiques et privées regroupant une pluralité d'utilisateurs et des services spécifiques,
les étapes d'échange de données (5) consistant à :
- associer une clé publique (11) asymétrique d'un utilisateur du dispositif (1) de communication à au moins une communauté demandée par celui-ci, chaque utilisateur du dispositif de communication disposant d'une clé publique (11) asymétrique qui lui est propre,
- permettre à l'utilisateur d'accéder aux services de la communauté, et/ou d'échanger avec les autres utilisateurs de la communauté, par reconnaissance de la clé publique de l'utilisateur, et
- sécuriser les échanges de données entre l'utilisateur et la communauté, et/ou entre les utilisateurs d'une même communauté, par cryptage d'au moins une partie des données (5) envoyées, via une clé (7) matérielle, connue du fournisseur (2) de services, et inscrite matériellement lors de la fabrication dans une mémoire (9) morte d'une puce (6) électronique du dispositif (1) de communication, et par décryptage, lors de la réception de données (5), des données reçues, via cette clé (7) matérielle,
le procédé comprenant les étapes successives suivantes pour l'accès à une communauté (21) publique, selon lesquelles :
- un utilisateur (13) demande (201), via le dispositif (1) de communication, l'accès à une communauté (21) publique proposant au moins un service et/ou l'échange de données entre utilisateurs de cette communauté, ladite communauté (21) publique étant gérée par le fournisseur (2) de services,
- le dispositif (1) de communication transmet (202) une clé (11)publique asymétrique, propre à l'utilisateur (13), au serveur (8) du fournisseur (2) de services,
- le serveur (8) du fournisseur (2) de services associe (203) à la communauté (21) publique demandée par l'utilisateur la clé (11) publique asymétrique de l'utilisateur, permettant ainsi à l'utilisateur (13) d'accéder à la communauté (21) publique,
le procédé comprenant les étapes successives suivantes pour l'accès à une communauté (20)privée, selon lesquelles :
- un premier utilisateur (13₁) demande (301). via le dispositif (1) de communication, l'accès à une communauté (20) privée proposant au moins un service et/ou l'échange de données entre utilisateurs de cette communauté, ladite communauté privée étant gérée par un second utilisateur (13₂),
- la demande du premier utilisateur (13₁) est transmise (302), via le serveur (8) du fournisseur (2) de services, au dispositif (1) de communication du second utilisateur (13₂),
- le second utilisateur (13₂) émet (303) une décision d'acception ou de refus via son dispositif (1) de communication, qui est transmise au serveur (8) du fournisseur (2) de services, et
- le premier utilisateur (13₁) est autorisé (304) à accéder à la communauté (20)privée en fonction de la décision du second d'utilisateur (13₂), une décision d'acceptation entraînant une association d'une clé (11) publique asymétrique du premier utilisateur (13₁) avec la communauté (20) privée,
le procédé comprenant des étapes successives d'échanges de données (5) entre :
- un premier utilisateur (13₁) équipé d'un premier dispositif (1₁) de communication comprenant une première clé (7₁) matérielle, et
- un deuxième utilisateur (13₂) équipé d'un deuxième dispositif (1₂) de communication comprenant une deuxième clé (7₂) matérielle,
les deux utilisateurs (13₁, 13₂) étant membres d'une même communauté (23), ledit procédé comprenant les étapes selon lesquelles :
- le premier utilisateur (13₁) demande (401), via le premier dispositif (1₁) de communication, à accéder à des données du second utilisateur (13₂),
- le serveur (8) du fournisseur (2) d'accès demande (402) au deuxième dispositif (1₂) de communication à accéder aux données du second (13₂) utilisateur,
- le deuxième dispositif (1₂) de communication transmet (403) ces données au serveur (8) du fournisseur (2) d'accès, cryptées, au moins en partie, par la deuxième clé (7₂) matérielle,
- le serveur (8) du fournisseur (2) d'accès décrypte (404)ces données par la deuxième clé (72) matérielle, les ré-encrypte avec la première clé (7₁) matérielle, et les transmet au premier dispositif (1₁) de communication, et
- le premier dispositif (1₁) de communication décrypte les données avec la première clé (7₁) matérielle, permettant l'accès aux données par le premier utilisateur (13₁).

2. Procédé selon la revendication 1, dans lequel :
- un utilisateur (13) s'enregistre (101) auprès du dispositif (1) de communication qui génère :
∘ au moins une clé publique asymétrique propre à l'utilisateur (13), ladite clé étant transmise au fournisseur (2) de services (104, 105),
∘ au moins une clé privée asymétrique propre à l'utilisateur (13) et stockée dans le dispositif (1) de communication (102, 103), et
- les données (5) échangées entre le dispositif (1) de communication et le fournisseur (2) de services comprennent la clé publique asymétrique propre à l'utilisateur (13), ladite clé publique asymétrique étant cryptée ou non cryptée par la clé (7) matérielle, la clé publique asymétrique permettant d'identifier l'utilisateur (13), et/ou des services du fournisseur (2) de services associés à cet utilisateur (13).

3. Procédé selon l'une des revendications 1 ou 2, dans lequel les données (5) échangées entre le dispositif (1) de communication et le serveur (8) du fournisseur (2) de services comprennent au moins une clé (K₁) de premier niveau, celle-ci servant à crypter au moins une clé (K₂) de deuxième niveau, ce cryptage successif étant réalisé jusqu'à une ou plusieurs clés (Kₙ) de niveau n, avec n un entier supérieur ou égal à deux, la clé (K₁) de premier niveau étant cryptée par la clé (7) matérielle.

4. Procédé selon l'une des revendications 1 à 3, dans lequel les données (5) échangées entre le dispositif (1) de communication et le serveur (8) du fournisseur (2) de services comprennent au moins l'une des informations suivantes :
- un identifiant (15) unique propre au dispositif (1) de communication, permettant au fournisseur (2) de services d'identifier le dispositif (1) de communication, le serveur (8) du fournisseur (2) de services utilisant cette identifiant (15) pour trouver la clé (7) matérielle associée au dispositif (1) de communication,
- un identifiant (16) de service, propre à chaque service demandé par l'utilisateur via le dispositif (1) de communication, permettant au serveur (8) du fournisseur (2) de services d'identifier le service demandé par l'utilisateur via le dispositif (1) de communication,
- une information relative à un index (17) utilisé pour choisir une clé transmise sur le réseau (3) de communication,
- un protocole (18) de communication sécurisée entre le dispositif (1) de communication et le serveur (8) du fournisseur (2) de services.

5. Procédé selon l'une des revendications 1 à 4, dans lequel l'échange de données entre le serveur (8) du fournisseur (2) de services et des utilisateurs membres d'une même communauté comprend l'étape selon laquelle une clé (30) pluri-utilisateurs, commune à au moins une partie des utilisateurs de la communauté, est utilisée pour crypter les données échangées.

6. Procédé selon la revendication 5, dans lequel l'envoi de données du serveur (8) du fournisseur (2) de services vers des utilisateurs membres d'une même communauté, lesdites données étant identiques pour les utilisateurs, comprend l'étape selon laquelle :
le serveur (8) du fournisseur (2) de services envoie une seule fois ces données, cryptées par la clé (30) pluri-utilisateurs, vers le réseau de communication qui les renvoie vers les dispositifs de communication de ces utilisateurs.

7. Procédé selon l'une des revendications 1 à 6, dans lequel
le serveur (8) du fournisseur (2) de services envoie une clé (31) de cryptage à au moins deux dispositifs de communication d'utilisateurs souhaitant échanger des données entre eux, et
les dispositifs de communication échangent des données entre eux directement via le réseau (3) de communication, sans que les données ne transitent par le serveur (8) du fournisseur de services, lesdites données étant cryptées par la clé (31) de cryptage.

8. Dispositif de communication (1), caractérisé que ce qu'il comprend :
- des moyens (29) d'accès à un réseau (3) de communication, pour échanger des données, via ce réseau (3), avec un serveur (8) d'un fournisseur (2) de services,
- une interface (30), pour interagir avec un utilisateur (13), et
- une clé (7) matérielle, connue du fournisseur (2) de services, et stockée matériellement lors de la fabrication dans une mémoire morte d'une puce (6) électronique du dispositif (1) de communication, ledit dispositif étant configuré pour exécuter, en lien avec le fournisseur (2) de services, les étapes du procédé selon l'une des revendications 1 à 7.

9. Système (37) de communication, configuré pour l'échange sécurisé de données (5) entre un dispositif (1) de communication et un serveur (8) d'un fournisseur (2) de services via un réseau (3) de communication, ledit système (37) étant **caractérisé en ce qu'**il comprend :
- au moins un serveur (8) d'un fournisseur (2) de services,
- au moins un dispositif de communication (1), comprenant :
∘ des moyens (29) d'accès à un réseau (3) de communication, pour échanger des données, via ce réseau (3), avec le serveur (8) du fournisseur (2) de services,
∘ une interface (30), pour interagir avec au moins un utilisateur (13), et
∘ une clé (7) matérielle, connue du fournisseur (2) de services, et stockée matériellement lors de la fabrication dans une mémoire (9) morte d'une puce (6) électronique du dispositif (1) de communication,
le dispositif de communication étant configuré pour échanger des données avec le serveur (8) du fournisseur (2) de services par l'intermédiaire du réseau (3) de communication, selon le procédé d'échange de l'une des revendications 1 à 7, et permettant à l'utilisateur (13) du dispositif (1) de communication d'utiliser des services (4) fournis par le fournisseur (2) de services.

## Patentansprüche

1. Verfahren zum sicheren Austausch von Daten (5) zwischen einer Kommunikationsvorrichtung (1) und einem Server (8) eines Diensteanbieters (2) über ein Kommunikationsnetz (3), wobei die Kommunikationsvorrichtung (1) ausgelegt ist, um mindestens einem Benutzer (13) der Kommunikationsvorrichtung (1) zu gestatten, von dem Diensteanbieter (2) bereitgestellte Dienste zu nutzen, wobei die zwischen der Kommunikationsvorrichtung (1) und mindestens einem Server (8) des Diensteanbieters (2) ausgetauschten Daten (5) die Schaffung und den Zugriff auf öffentliche und private Communities (20, 21, 23) gestatten, die eine Vielzahl von Benutzern und spezifische Dienste vereinen, wobei die Schritte des Austauschs von Daten (5) darin bestehen:
- einen asymmetrischen öffentlichen Schlüssel (11) eines Benutzers der Kommunikationsvorrichtung (1) mindestens einer von ihm verlangten Community zuzuordnen, wobei jeder Benutzer der Kommunikationsvorrichtung über einen persönlichen asymmetrischen öffentlichen Schlüssel (11) verfügt,
- dem Benutzer zu gestatten, auf die Dienste der Community zuzugreifen und/oder mit den anderen Benutzern der Community durch Erkennen des öffentlichen Schlüssels des Benutzers in den Austausch zu treten, und
- den Austausch von Daten zwischen dem Benutzer und der Community und/oder zwischen den Benutzern derselben Community durch Verschlüsseln von mindestens einem Teil der versandten Daten (5) über einen materiellen Schlüssel (7), der dem Diensteanbieter (2) bekannt ist und bei der Herstellung materiell in einen toten Speicher (9) eines elektronischen Chips (6) der Kommunikationsvorrichtung (1) eingetragen wird, und durch Entschlüsseln beim Empfang von Daten (5) der über diesen materiellen Schlüssel (7) empfangenen Daten abzusichern,
wobei das Verfahren die folgenden aufeinanderfolgenden Schritte für den Zugriff auf eine öffentliche Community (21) umfasst, gemäß denen:
- ein Benutzer (13) über die Kommunikationsvorrichtung (1) den Zugriff auf eine öffentliche Community (21) anfordert (201), die mindestens einen Dienst und/oder den Austausch von Daten zwischen Benutzern dieser Community anbietet, wobei die öffentliche Community (21) von dem Diensteanbieter (2) verwaltet wird,
- die Kommunikationsvorrichtung (1) einen persönlichen asymmetrischen öffentlichen Schlüssel (11) des Benutzers an den Server (8) des Diensteanbieters (2) überträgt (202),
- der Server (8) des Diensteanbieters (2) der von dem Benutzer verlangten öffentlichen Community (21) den asymmetrischen öffentlichen Schlüssel (11) des Benutzers zuordnet (203), wodurch es dem Benutzer (13) gestattet wird, auf die öffentliche Community (21) zuzugreifen,
wobei das Verfahren die folgenden aufeinanderfolgenden Schritte für den Zugriff auf eine private Community (20) umfasst, gemäß denen:
- ein erster Benutzer (13₁) über die Kommunikationsvorrichtung (1) den Zugriff auf eine private Community (20) verlangt (301), die mindestens einen Dienst und/oder den Austausch von Daten zwischen Benutzern dieser Community anbietet, wobei die private Community von einem zweiten Benutzer (13₂) verwaltet wird,
- die Anforderung des ersten Benutzers (13₁) über den Server (8) des Diensteanbieters (2) an die Kommunikationsvorrichtung (1) des zweiten Benutzers (13₂) übertragen wird (302),
- der zweite Benutzer (13₂) eine Akzeptanz- oder Ablehnungsentscheidung über seine Kommunikationsvorrichtung (1) sendet (303), die an den Server (8) des Diensteanbieters (2) übertragen wird, und
- der erste Benutzer (13₁) berechtigt wird (304), in Abhängigkeit von der Entscheidung des zweiten Benutzers (13₂) auf die private Community (20) zuzugreifen, wobei eine Akzeptanzentscheidung eine Zuordnung eines asymmetrischen öffentlichen Schlüssels (11) des ersten Benutzers (13₂) zu der privaten Community (20) bewirkt,
wobei das Verfahren aufeinanderfolgende Austauschschritte von Daten (5) umfasst zwischen:
- einem ersten Benutzer (13₁), der mit einer ersten Kommunikationsvorrichtung (1₁) ausgestattet ist, umfassend einen ersten materiellen Schlüssel (7₁), und
- einem zweiten Benutzer (13₂), der mit einer zweiten Kommunikationsvorrichtung (1₂) ausgestattet ist, umfassend einen zweiten materiellen Schlüssel (7₂),
wobei die zwei Benutzer (13₁, 13₂) Mitglieder derselben Community (23) sind, wobei das Verfahren die Schritte umfasst, gemäß denen:
- der erste Benutzer (13₁) über die erste Kommunikationsvorrichtung (1₁) anfordert (401), auf Daten des zweiten Benutzers (13₂) zuzugreifen,
- der Server (8) des Zugangsanbieters (2) von der zweiten Kommunikationsvorrichtung (1₂) anfordert (402), auf Daten des zweiten Benutzers (13₂) zuzugreifen,
- die zweite Kommunikationsvorrichtung (1₂) diese Daten an den Server (8) des Zugangsanbieters (2) mindestens zum Teil durch den zweiten materiellen Schlüssel (7₂) verschlüsselt überträgt (403),
- der Server (8) des Zugangsanbieters (2) diese Daten durch den zweiten materiellen Schlüssel (7₂) entschlüsselt (404), sie mit dem ersten materiellen Schlüssel (7₁) erneut verschlüsselt und sie an die erste Kommunikationsvorrichtung (1₁) überträgt, und
- die erste Kommunikationsvorrichtung (1₁) die Daten mit dem ersten materiellen Schlüssel (7₁) entschlüsselt, wodurch der Zugriff auf die Daten durch den ersten Benutzer (13₁) gestattet wird.

2. Verfahren nach Anspruch 1, wobei:
- sich ein Benutzer (13) bei der Kommunikationsvorrichtung (1) registriert (101), die erzeugt:
∘ mindestens einen persönlichen asymmetrischen öffentlichen Schlüssel des Benutzers (13), wobei der Schlüssel an den Diensteanbieter (2) übermittelt wird (104, 105),
∘ mindestens einen persönlichen asymmetrischen privaten Schlüssel des Benutzers (13), der in der Kommunikationsvorrichtung (1) gespeichert ist (102, 103), und
- die zwischen der Kommunikationsvorrichtung (1) und dem Diensteanbieter (2) ausgetauschten Daten (5) den persönlichen asymmetrischen öffentlichen Schlüssel des Benutzers (13) umfassen, wobei der asymmetrische öffentliche Schlüssel von dem materiellen Schlüssel (7) verschlüsselt oder nicht verschlüsselt wird, wobei der asymmetrische öffentliche Schlüssel gestattet, den Benutzer (13) und/oder Dienste des Diensteanbieters (2) zu identifizieren, die diesem Benutzer (13) zugeordnet sind.

3. Verfahren nach einem der Ansprüche 1 oder 2, wobei die zwischen der Kommunikationsvorrichtung (1) und dem Server (8) des Diensteanbieters (2) ausgetauschten Daten (5) mindestens einen Schlüssel (K₁) ersten Niveaus umfassen, wobei dieser dazu dient, mindestens einen Schlüssel (K₂) zweiten Niveaus zu verschlüsseln, wobei dieses aufeinanderfolgende Verschlüsselung bis zu einem oder mehreren Schlüssel (Kₙ) des Niveaus n mit n als Ganzzahl größer oder gleich zwei durchgeführt wird, wobei der Schlüssel (K₁) ersten Niveaus durch den materiellen Schlüssel (7) verschlüsselt wird.

4. Verfahren nach einem der Ansprüche 1 bis 3, wobei die zwischen der Kommunikationsvorrichtung (1) und dem Server (8) des Diensteanbieters (2) ausgetauschten Daten (5) mindestens eine der folgenden Informationen umfassen:
- eine einzige persönliche Kennung (15) der Kommunikationsvorrichtung (1), die es dem Diensteanbieter (2) gestattet, die Kommunikationsvorrichtung (1) zu identifizieren, wobei der Server (8) des Diensteanbieters (2) diese Kennung (15) verwendet, um den materiellen Schlüssel (7) zu finden, der der Kommunikationsvorrichtung (1) zugeordnet ist,
- eine persönliche Dienstkennung (16) jedes von dem Benutzer über die Kommunikationsvorrichtung (1) angeforderten Dienstes, die es dem Server (8) des Diensteanbieters (2) gestattet, den von dem Benutzer über die Kommunikationsvorrichtung (1) angeforderten Dienst zu identifizieren,
- eine Information, die sich auf einen Index (17) bezieht, der verwendet wird, um einen Schlüssel zu wählen, der über das Kommunikationsnetz (3) übertragen wird,
- ein sicheres Kommunikationsprotokoll (18) zwischen der Kommunikationsvorrichtung (1) und dem Server (8) des Diensteanbieters (2).

5. Verfahren nach einem der Ansprüche 1 bis 4, wobei der Austausch von Daten zwischen dem Server (8) des Diensteanbieters (2) und Benutzern, die Mitglieder derselben Community sind, den Schritt umfasst, dem gemäß ein Mehrbenutzerschlüssel (30), der mindestens einem Teil der Benutzer der Community gemeinsam ist, verwendet wird, um die ausgetauschten Daten zu verschlüsseln.

6. Verfahren nach Anspruch 5, wobei der Versand von Daten vom Server (8) des Diensteanbieters (2) zu Benutzern, die Mitglieder derselben Community sind, wobei die Daten für die Benutzer identisch sind, den Schritt umfasst, dem gemäß:
der Server (8) des Diensteanbieters (2) diese von dem Mehrbenutzerschlüssel (30) verschlüsselten Daten einmal zu dem Kommunikationsnetz schickt, das sie an die Kommunikationsvorrichtungen dieser Benutzer zurückschickt.

7. Verfahren nach einem der Ansprüche 1 bis 6, wobei der Server (8) des Diensteanbieters (2) einen Verschlüsselungsschlüssel (31) an mindestens zwei Kommunikationsvorrichtungen von Benutzern schickt, die Daten untereinander austauschen möchten, und
die Kommunikationsvorrichtungen Daten untereinander direkt über das Kommunikationsnetz (3) austauschen, ohne dass die Daten durch den Server (8) des Diensteanbieters laufen, wobei die Daten von dem Verschlüsselungsschlüssel (31) verschlüsselt werden.

8. Kommunikationsvorrichtung (1), **dadurch gekennzeichnet, dass** sie umfasst:
- Zugriffsmittel (29) auf ein Kommunikationsnetz (3), um Daten über dieses Netz (3) mit einem Server (8) eines Diensteanbieters (2) auszutauschen,
- eine Schnittstelle (30), um mit einem Benutzer (13) zu interagieren, und
- einen materiellen Schlüssel (7), der dem Diensteanbieter (2) bekannt ist und der bei der Herstellung materiell in einem toten Speicher eines elektronischen Chips (6) der Kommunikationsvorrichtung (1) gespeichert wird, wobei die Vorrichtung ausgelegt ist, um in Verbindung mit dem Diensteanbieter (2) die Schritte des Verfahrens nach einem der Ansprüche 1 bis 7 auszuführen.

9. Kommunikationssystem (37), das für den sicheren Austausch von Daten (5) zwischen einer Kommunikationsvorrichtung (1) und einem Server (8) eines Diensteanbieters (2) über ein Kommunikationsnetz (3) ausgelegt ist, wobei das System (37) **dadurch gekennzeichnet ist, dass** es umfasst:
- mindestens einen Server (8) eines Diensteanbieters (2),
- mindestens eine Kommunikationsvorrichtung (1), umfassend:
∘ Zugriffsmittel (29) auf ein Kommunikationsnetz (3), um Daten über dieses Netz (3) mit dem Server (8) des Diensteanbieters (2) auszutauschen,
∘ eine Schnittstelle (30), um mit mindestens einem Benutzer (13) zu interagieren, und
∘ einen materiellen Schlüssel (7), der dem Diensteanbieter (2) bekannt ist und der bei der Herstellung materiell in einem toten Speicher eines elektronischen Chips (6) der Kommunikationsvorrichtung (1) gespeichert wird,
wobei die Kommunikationsvorrichtung ausgelegt ist, um Daten mit dem Server (8) des Diensteanbieters (2) über das Kommunikationsnetz (3) nach dem Austauschverfahren nach einem der Ansprüche 1 bis 7 auszutauschen und dem Benutzer (13) der Kommunikationsvorrichtung (1) gestattet, von dem Diensteanbieter (2) bereitgestellte Dienste (4) zu verwenden.

## Claims

1. A method for securely exchanging data (5) between a communication device (1) and a server (8) of a service provider (2) via a communications network (3), the communication device (1) being configured to enable services provided by the service provider (2) to be used by at least one user (13) of the communication device (1), the data (5) exchanged between the communication device (1) and at least one server (8) of the service provider (2) allowing the creation and the access to public and private communities (20, 21, 23) grouping a plurality of users and specific services, the data exchange steps (5) consisting of:
- associating an asymmetrical public key (11) of a user of the communication device (1) with at least one community requested by the latter, each user of the communication device (1) having an asymmetrical public key (11) which is specific to him/her,
- allowing the user to access the services of the community, and/or exchange with the other users of the community, by recognition of the public key of each user, and
- securing the exchanges of data between the users and the community, and/or between the users of a same community, by encryption of at least one portion of the sent data (5), via a hardware key (7) known to the service provider (2), and materially written into a read-only memory (9) of an electronic chip (6) of the communication device (1) during manufacturing, and by decryption, upon receiving data (5), of the received data, via this hardware key (7),
the method comprising the following successive steps for access to a public community (21), wherein:
- a user (13) requests (201) via the communication device (1), access to a public community (21) proposing at least one service and/or the exchange of data between users of this community, said public community (21) being managed by the service provider (2),
- the communication device (1) transmits (202) an asymmetrical public key (11), specific to the user (13), to the server (8) of the service provider (2),
- the server (8) of the service provider (2) associates (203) with the public community (21) requested by the user the asymmetrical public key (11) of the user, thus allowing the user (13) to access this public community (21),
the method comprising the following successive steps for access to a private community (20), wherein:
- a first user (131) requests (301), via the communication device (1), access to a private community (20) proposing at least one service and/or the exchange of data between users of this community, said private community being managed by a second user (132),
- the request of the first user (131) is transmitted (302), via the server (8) of the service provider (2), to the communication device (1) of the second user (132),
- the second user (132) issues (303) an acceptance or refusal decision via his/her communication device (1), which is transmitted to the server (8) of the service provider (2) and
- the first user (13₁) is authorized (304) to access the private community (20) depending on the decision of the second user (132), an acceptance decision causing association of an asymmetrical public key (11) of the first user (131) with the private community (20),
the method comprising successive steps of data exchanges (5) between:
- a first user (131) equipped with a first communication device (11) comprising a first hardware key (7₁), and
- a second user (132) equipped with a second communication device (12) comprising a second hardware key (7₂),
both users (13₁, 132) being members of a same community (23), said method comprising the steps according to which:
- the first user (131) requests (401) via the first communication device (11), access to data of the second user (13₂),
- the server (8) of the access provider (2) requests (402) from the second communication device (1₂) access to the data of the second user (13₂),
- the second communication device (1₂) transmits (403) these data to the server (8) of the access provider (2), encrypted at least partly with the second hardware key (7₂),
- the server (8) of the access provider (2) decrypts (404) these data with the second hardware key (7₂), re-encrypts them with the first hardware key (7₁) and transmits them to the first communication device (1₁), and
- the first communication device (11) decrypts the data with the first hardware key (71), allowing access to the data by the first user (131).

2. The method according to claim 1, wherein:
- a user (13) registers (101) at the communication device (1) which generates:
∘ at least one asymmetrical public key specific to the user (13), said key being transmitted to the service provider (2) (104, 105),
∘ at least one asymmetrical private key specific to the user (13) or stored in the communication device (1) (102, 103), and
- the data (5) exchanged between the communication device (1) and the service provider (2) comprise the asymmetrical public key specific to the user (13), said asymmetrical public key being encrypted or not encrypted by the hardware key (7), the asymmetrical public key allowing identification of the user (13) and/or of the services of the service provider (2), associated with this user (13).

3. The method according to one of claims 1 or 2, wherein the data (5) exchanged between the communication device (1) and the server (8) of the service provider (2) comprise at least one key (K₁) of a first level, this one being used to encrypt at least one key (K₂) of a second level, this successive encryption being achieved down to one or several keys (Kₙ) of level n, with n being an integer greater than or equal to 2, the first level key (K₁) being encrypted with the hardware key (7).

4. The method according to one of claims 1 to 3, wherein the data (5) exchanged between the communication device (1) and the server (8) of the service provider (2) comprise at least one of the following pieces of information:
- a unique identifier (15) specific to the communication device (1), allowing the service provider (2) to identify the communication device (1), the server (8) of the service provider (2) using this identifier (15) for finding the hardware key (7) associated with the communication device (1),
- a service identifier (16), specific to each service requested by the user via the communication device (1), allowing the server (8) of the service provider (2) to identify the service requested by the user via the communication device (1),
- a piece of information relative to an index (17) used for selecting a key transmitted over the communications network (3),
- a secure communication protocol (18) between the communication device (1) and the server (8) of the service provider (2).

5. The method according to one of claims 1 to 4, wherein the exchange of data between the server (8) of the service provider (2) and the user-members of a same community comprises the step according to which a multi-user key (30) common to at least one portion of the users of the community, is used for encrypting the exchanged data.

6. The method according to claim 5, wherein the sending of data from the server (8) of the service provider (2) to user-members of a same community, said data being identical for the users, comprises the step according to which:
the server (8) of the service provider (2) sends only once these data, encrypted with the multi-user key (30), to the communications network which sends them back to the communication devices of these users.

7. The method according to one of claims 1 to 6, wherein
the server (8) of the service provider (2) sends an encryption key (31) to at least two communication devices of users wishing to exchange data between them, and
the communication devices exchange data between them directly via the communications network (3), without the data passing through the server (8) of the service provider, said data being encrypted with the encryption key (31).

8. A communication device (1), **characterized in that** it comprises:
- means (29) for accessing a communications network (3) for exchanging data, via this network (3) with a server (8) of a service provider (2),
- an interface (30), for interacting with a user (13) and
- a hardware key (7) known to the service provider (2), and materially stored in a read-only memory of an electronic chip (6) of the communication device (1) during manufacturing, said device being configured for executing, in connection with the service provider (2), the steps of the method according to one of claims 1 to 7.

9. A communication system (37), configured for securely exchanging data (5) between a communication device (1) and a server (8) of a service provider (2) via a communications network (3), said system (37) being **characterized in that** it comprises:
- at least one server (8) of a service provider (2),
- at least one communication device (1), comprising:
∘ means (29) for accessing a communications network (3), for exchanging data, via this network (3), with the server (8) of the service provider (2),
∘ an interface (30), for interacting with at least one user (13), and
∘ a hardware key (7), known to the service provider (2), and materially stored in a -read-only memory (9) of an electronic chip (6) of the communication device (1) during manufacturing,
the communication device being configured for exchanging data with the server (8) of the service provider (2) via the communications network (3), according to the exchange method of one of claims 1 to 7, and allowing the user (13) of the communication device (1) to use services (4) provided by the service provider (2).
